# EUROPEAN PATENT SPECIFICATION

(11) **EP 2 375 469 B1**
(45) Date of publication and mention of the grant of the patent: **10.05.2017**
(21) Application number: 11250350.3
(22) Date of filing: 21.03.2011
(51) Int. Cl.: H01M 2/02, H01M 10/04, H01M 2/36

(54) **Secondary battery and a fabrication method thereof**
Sekundärbatterie und Herstellungsverfahren dafür
Batterie secondaire et son procédé de fabrication

(30) Priority: 30.03.2010 US 319135 P; 03.02.2011 US 201113020759
(43) Date of publication of application: 12.10.2011
(73) Proprietor: Samsung SDI Co., Ltd., Yongin-si, Gyeonggi-do (KR)
(72) Inventor: Yoon, Jangho, Gyeonggi-do (KR)
(74) Representative: Mounteney, Simon James

(56) References cited:
- WO-A1-2007/061262
- US-A1- 2002 164 441
- US-B1- 6 207 318
- US-B1- 6 371 996

## Description

The present invention relates to a secondary battery and a fabrication method thereof.

### BACKGROUND ART

Along with the remarkable development of electronic devices such as cellular phones, notebook-sized computers, camcorders, electric motorcycles and electric vehicles, research into secondary batteries that are generally repeatedly chargeable is actively under way.

Secondary batteries can be fabricated in a variety of configurations. These include: pouch type batteries, cylinder type batteries, and prismatic batteries. A pouch type secondary battery typically includes an electrode assembly accommodated in a multi-layered pouch constituted by a metal foil and at least one polymer layer covering the metal foil. In practice, the electrode assembly is located in a receiving space of the pouch formed through a forming process using a punch or a die. Whilst this generally yields good results, and the depth of the receiving space of the pouch increases, it can become quite difficult to achieve flexibility in designing an exterior shape of the pouch, resulting in limitations in accommodating an electrode assembly having a relatively large thickness. This in turn means that achieving a large-capacity battery can be difficult.

### TECHNICAL PROBLEM

The present invention sets out to provide a secondary battery that is capable of accommodating an electrode assembly having a large thickness and offers increased flexibility when designing an exterior shape for the pouch.

The invention also sets out to provide a fabrication method for the battery.

US 2002/0164441 A1 discloses a secondary battery having a double seal, and methods for its manufacture.

US 6,371,996 B1 and WO 2007/961262 A1 disclose further secondary batteries and associated manufacturing processes.

### TECHNICAL SOLUTION

Accordingly, the invention provides a fabrication process as set out in Claim 1. Preferred features of this aspect of the invention are set out in Claims 2 to 10.

In a fabrication method of a secondary battery according to an embodiment of the present invention, the secondary battery can thus be fabricated irrespective of the thickness of electrode assembly accommodated therein. In addition, the exterior shape of a pouch encasing the electrode assembly can be completed by performing the second joining step. Therefore, even when the electrode assembly is relatively thick, the fabrication of the secondary battery can be easily achieved, thereby allowing the electrode assembly to be accommodated therein. Further, in a secondary battery according to the present invention, the exterior shape of the sheath encasing the electrode assembly can be flexibly designed as a consequence of its structure and the manufacturing process.

### BRIEF DESCRIPTION OF THE DRAWINGS

FIG. 1 is a flowchart of a fabrication method of a pouch type secondary battery according to an embodiment of the present invention;
FIGS. 2A through 2F illustrate the fabrication method of a pouch type secondary battery according to an embodiment of the present invention;
FIGS. 3A and 3B illustrate a first joining step in the fabrication method of a pouch type secondary battery according to an embodiment of the present invention, and FIG. 3C is a partially enlarged view of a rectangular portion indicated by '3C' of FIG. 3B;
FIGS. 4A and 4B illustrate a second joining step in the fabrication method of a pouch type secondary battery according to an embodiment of the present invention, and FIG. 4C is a partially enlarged view of a rectangular portion indicated by '4C' of FIG. 4B;
FIGS. 5A and 5B illustrate steps of cutting and folding in the fabrication method of a pouch type secondary battery according to an embodiment of the present invention;
FIG. 6 is a cross-sectional view schematically illustrating a transversely cut section of a pouch type secondary battery according to an embodiment of the present invention; and
FIGS. 7A through 7C illustrate first and second joining steps and a folding step for joining first and second pouch sheets according to an embodiment of the present invention.

### DETAILED DESCRIPTION

Embodiments of the invention will now be described more fully hereinafter with reference to the accompanying drawings. It should be understood, however, that the invention may be embodied in different forms and should not be construed as limited to the embodiments set forth herein. Rather, these embodiments are provided so that this disclosure will be thorough and complete, and will fully convey the scope of the invention to those skilled in the art.

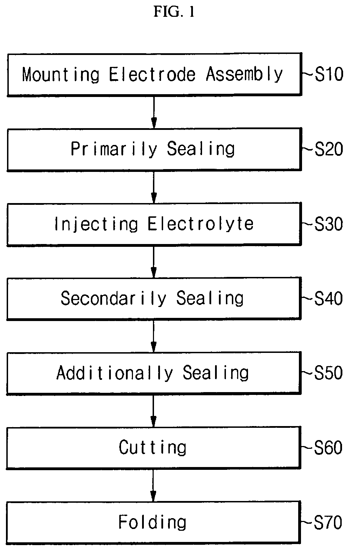

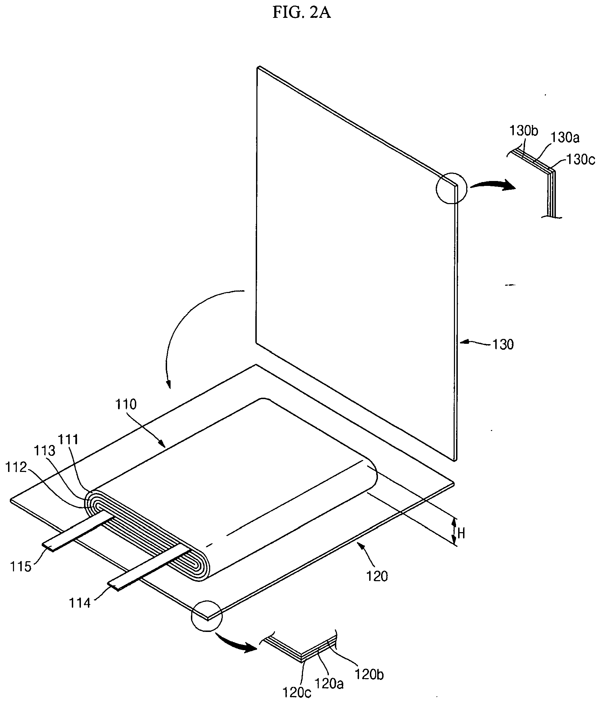

FIG. 1 is a flowchart of a fabrication method of a pouch type secondary battery according to an embodiment of the present invention. FIGS. 2A through 2F illustrate the fabrication method of a pouch type secondary battery according to an embodiment of the present invention.

Referring to FIG. 1, the fabrication method of a pouch type secondary battery according to an embodiment of the present invention includes mounting an electrode assembly (S10), a first joining step (S20), injecting an electrolyte (S30), and an additional sealing step (S40). In addition, the fabrication method further includes a second joining step (S50), cutting (S60), and folding (S70).

The respective steps illustrated in FIG. 1 will now be described in more detail with reference to FIGS. 2A through 2G.

Referring to FIGS. 1 and 2A, in the mounting of the electrode assembly (S10), an electrode assembly 110 is mounted between a first pouch sheet 120 and a second pouch sheet 130.

The electrode assembly 110 includes a first electrode plate 111, a second electrode plate 112, a separator 113, a first electrode tab 114, and a second electrode tab 115.

The first electrode plate 111 may have a portion coated with either a positive electrode active material or a negative electrode active material. For example, the first electrode plate 111 may have a portion coated with the positive electrode active material.

The second electrode plate 112 may have a portion coated with either a negative electrode active material or a positive electrode active material. For example, the second electrode plate 112 may have a portion coated with the negative electrode active material.

The separator 113 is disposed between the first electrode plate 111 and the second electrode plate 112 to prevent an electrical short between the first electrode plate 111 and the second electrode plate 112.

The first electrode tab 114 extending from the first electrode plate 111 is drawn out a predetermined length from the first electrode plate 111. In addition, the first electrode tab 114 may be made of aluminum (Al), but the material of the first electrode tab 114 is not limited thereto. The second electrode tab 115 extending from the second electrode plate 112 is drawn out a predetermined length from the second electrode plate 112. The second electrode tab 115 may be made of nickel (Ni), but the material of the second electrode tab 115 is not limited thereto.

The electrode assembly 110 has a height H along its thickness direction, the height H ranging from approximately 10 mm to approximately 1000 mm, suggesting that even if the electrode assembly 110 is relatively thick, it can be used in a fabrication method according to of the present invention. Particularly, in illustrated fabrication method, the exterior shape of a sheath of the pouch type secondary battery can be completed through the second joining step (S50), without a forming process. Therefore, even when the electrode assembly 110 is formed to be relatively thick, the pouch type secondary battery can be easily fabricated.

The first pouch sheet 120 includes a base layer 120a, a thermal fusion layer 120b formed on one surface of the base layer 120a, and an insulation layer 120c formed on the other surface of the base layer 120a. The base layer 120a may be made of a metal such as aluminum (Al). The thermal fusion layer 120b may be made of a polymer resin selected from polypropylene and polyethylene. The insulation layer 120c may be made of at least one material selected from nylon and polyethyleneterephthalate. However, the structure and material of the first pouch sheet 120 are not limited to those illustrated above.

The second pouch sheet 130 includes a base layer 130a 140b 140c, a thermal fusion layer 130b formed on one surface of the base layer 130a, and an insulation layer 130c formed on the other surface of the base layer base layer 130a. The base layer 130a may be made of a metal such as aluminum (Al). The thermal fusion layer 130b may be made of a polymer resin selected from polypropylene and polyethylene. The insulation layer 130c may be made of at least one material selected from nylon and polyethyleneterephthalate. However, the structure and material of the second pouch sheet 130 are not limited to those illustrated above.

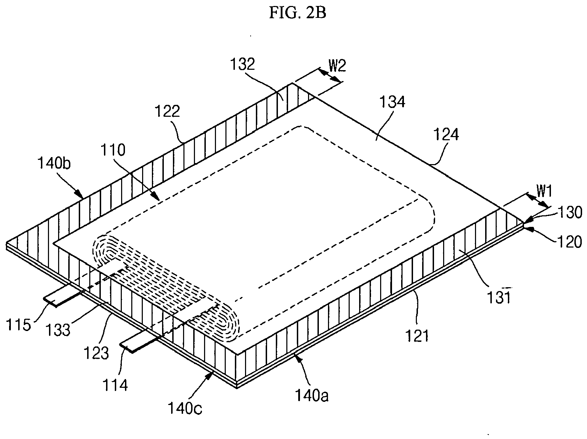

Referring to FIGS. 1 and 2B, in the first joining step (S20), outer side portions of the first pouch sheet 120 and the second pouch sheet 130 are sealed to accommodate the electrode assembly 110 between the first pouch sheet 120 and the second pouch sheet 130 facing each other. Here, the sealing may be performed by thermal fusion using first and second jigs. In addition, the first pouch sheet 120 and the second pouch sheet 130 may be sealed such that the first and second electrode tabs 114 and 115 of the electrode assembly 110 extend outside the electrode assembly 110. Further, when the first pouch sheet 120 and the second pouch sheet 130 are sealed, some portions of the first pouch sheet 120 and the second pouch sheet 130 may remain unsealed, thereby forming an electrolyte injection passage.

In this particular embodiment, first sides 121 and 131 of the first pouch sheet 120 and the second pouch sheet 130, which are positioned at one side of the electrode assembly 110, are sealed to each other in the first joining step. In addition, second sides 122 and 132 of the first pouch sheet 120 and the second pouch sheet 130, which are positioned at the other side of the electrode assembly 110, are sealed to each other. In addition, third sides 123 and 133 of the first pouch sheet 120 and the second pouch sheet 130, from which the first electrode tab 114 and the second electrode tab 115 extend outside the electrode assembly 110, are sealed to each other. In contrast, fourth sides 124 and 134 of the first pouch sheet 120 and the second pouch sheet 130 are sealed to each other, thereby leaving an unsealed portion between the fourth sides 124 and 134 which can then function as an electrolyte injection passage.

As the result of the first joining step (S20), sealed portions are therefore formed between the first pouch sheet 120 and the second pouch sheet 130, and are defined as first sealed portions 140a, 140b and 140c, respectively. W1 and W2 denote widths of the sealed portions positioned at opposite sides of the electrode assembly 100, i.e., at the first sides 121 and 131 and the second sides 122 and 132, respectively.

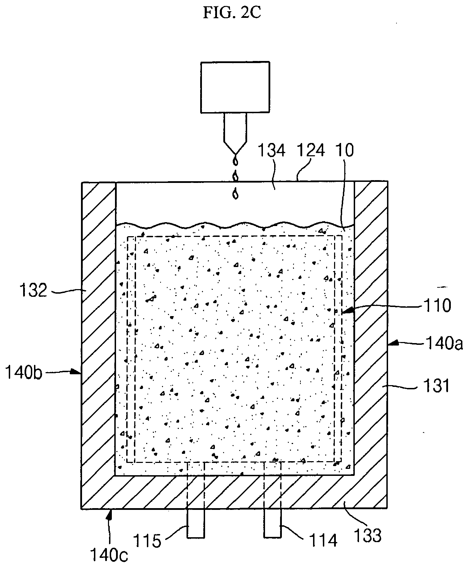

Referring to FIGS. 1 and 2C, during the injection of the electrolyte (S30), an electrolyte 10 is injected through the electrolyte injection passage derived from the unsealed portions in the first joining step (S20).

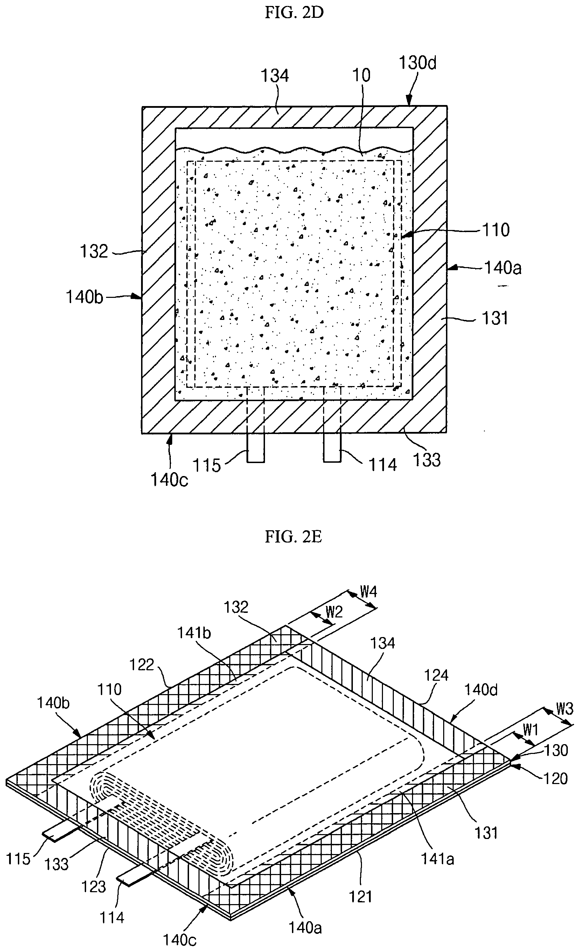

Referring to FIGS. 1 and 2D, in the additional joining step (S40), the electrolyte injection passage is sealed. Consequently, the electrode assembly 110 is hermetically sealed between the first pouch sheet 120 and the second pouch sheet 130. Here, the sealed electrolyte injection passage is defined as a second sealed portion 140d.

In another embodiment of the present invention, the first sides 121 and 131 of the first and second pouch sheets 120 and 130 may be used as the electrolyte injection passage. Here, after the second sides 122 and 132, the third sides 123 and 133 and the fourth sides 124 and 134 of the first and second pouch sheets 120 and 130 are primarily sealed in a first joining step and the electrolyte is then injected, the first sides 121 and 131 are secondarily sealed in an additional joining step.

In alternative embodiments of the present invention, the second sides 122 and 132 of the first and second pouch sheets 120 and 130 may be used as the electrolyte injection passage. In such a case, after the first sides 121 and 131, the third sides 123 and 133 and the fourth sides 124 and 134 of the first and second pouch sheets 120 and 130 are primarily sealed in a first joining step and the electrolyte is then injected, the second sides 122 and 132 are secondarily sealed in an additional joining step.

In some embodiments of the present invention, the third sides 123 and 133 of the first and second pouch sheets 120 and 130 may be used as the electrolyte injection passage. Here, after the first sides 121 and 131, the second sides 122 and 132 and the fourth sides 124 and 134 of the first and second pouch sheets 120 and 130 are primarily sealed in a first joining step and the electrolyte is then injected, the third sides 123 and 133 are secondarily sealed in an additional joining step.

For the avoidance of doubt the additional joining step (S40) may be omitted and any electrolyte injection passage may in such a case be formed elsewhere in one of the pouch sheets.

Referring to FIGS. 1 and 2E, in the second joining step (S50), in order to complete the final exterior shape of the pouch type secondary battery, the additional joining step (S40) is followed by further sealing outer side portions of the first pouch sheet 120 and the second pouch sheet 130. That is to say, in the second joining step (S50), the final exterior shape of the pouch type secondary battery is completed using first and second mold jigs. Preferably, additionally sealed portions 141 a and 141b areformed at the first side 121 of the first pouch sheet 120 and at the first side 131 of the second pouch sheet 130, respectively. Alternatively, the additionally sealed portions 141a and 141 b may be formed at the second side 122 of the first pouch sheet 120 and at the second side 132 of the second pouch sheet 130. In this embodiment, the widths W3 and W4 of sealed portions resulting from the second joining step (S50), positioned at the first sides 121 and 131 and the second sides 122 and 132, are made greater than the widths W1 and W2 of the sealed portions resulting from the first joining step (S20). The exterior shape of the sheath of the pouch type secondary battery is completed by performing a forming process using molds while making the widths W3 and W4 of the sealed portions resulting from the second joining step (S50) greater than the widths W1 and W2 of the sealed portions resulting from the primarily sealing (S20). Here, the sealed portions resulting from the additionally sealing (S50), including the first sealed portion 140a, are formed over a relatively large area. For a better understanding of the present invention, however, only the newly sealed portions formed by the second joining step are defined as additionally sealed portions 141a and 141b. In other words, the additionally sealed portions 141a and 141b correspond to portions obtained by subtracting the portion with the width W1 from the portion with the width W3 and by subtracting the portion with the width W2 from the portion with the width W4.

Of course, the second joining step may also be performed on the fourth sides 124 and 134 of the first and second pouch sheets 120 and 130. That is to say, although the illustrated embodiment shows that the second joining step is performed only inward to include the first sides 121 and 131 and the second sides 122 and 132 of the first and second pouch sheets 120 and 130, the second joining step may also be performed inward to include the fourth sides 124 and 134 as well.

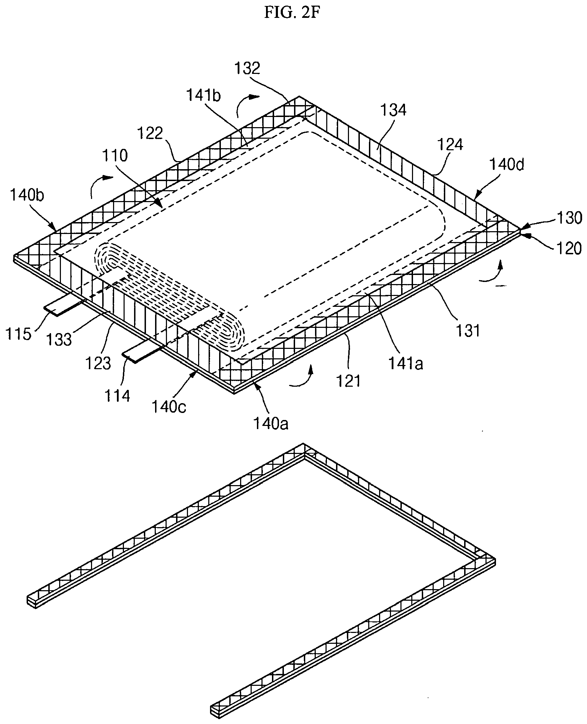

Referring to FIGS. 1 and 2F, in the cutting (S60), outer side portions of the first pouch sheet 120 and the second pouch sheet 130 are cut for removal so as to be tailored to the use of the pouch type secondary battery. As such, the pouch type secondary battery can be made less bulky. In addition, in the folding (S70), side portions of the first pouch sheet 120 and the second pouch sheet 130 are folded to roughly face the electrode assembly 110, so as to be tailored to the use of the pouch type secondary battery.

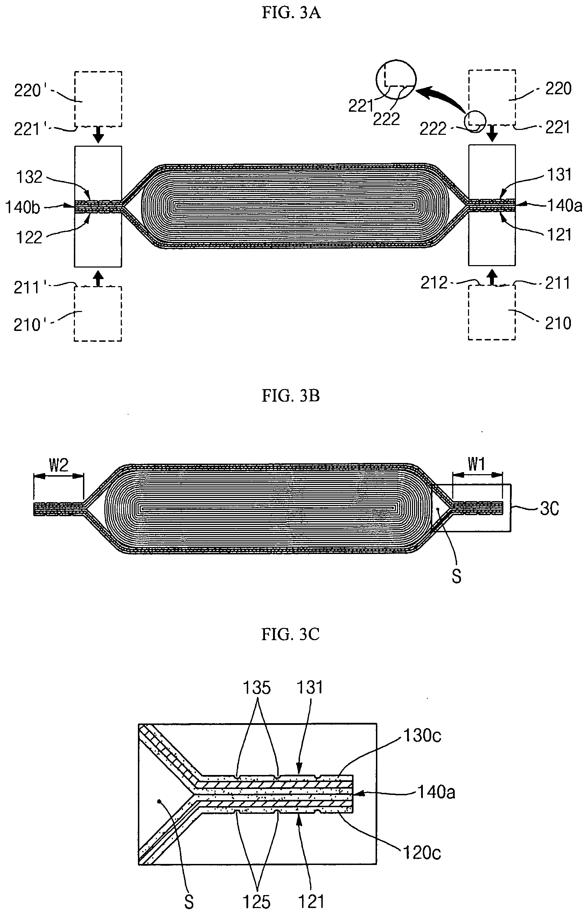

FIGS. 3A and 3B illustrate a first joining step in a fabrication method for a pouch type secondary battery according to an embodiment of the present invention, and FIG. 3C is a partially enlarged view of a rectangular portion indicated by '3C' of FIG. 3B.

As illustrated in FIG. 3A, in the first joining step (S20), a first jig 210 and a second jig 220 are used. The first jig 210 has a compressed portion 211 and the second jig 220 has a compressed portion 221, both of the compressed portions 211 and 221 being substantially planar. In detail, outer side portions of the first pouch sheet 120 and the second pouch sheet 130 are sealed to each other using the substantially planar, compressed portions 211 and 221 of the first jig 210 and the second jig 220 being at high temperature. For example, the first sides 121 and 131 of the first and second pouch sheets 120 and 130, positioned at one side of the electrode assembly 110 accommodated inside between the first pouch sheet 120 and the second pouch sheet 130, are thermally fused using the substantially planar, compressed portions 211 and 221 of the first jig 210 and the second jig 220 at high temperature. In addition, the second sides122 and 132 of the first and second pouch sheets 120 and 130, positioned at the other side of the electrode assembly 110, are thermally fused using another substantially planar, compressed portions 211' and 221' of first and second jig 210' and 220' at high temperature.

In such a manner, the first sealed portion 140a and 140b with the width W1 and W2 is formed at either side edge portion of the first pouch sheet 120 and the second pouch sheet 130.

In this embodiment, the substantially planar, compressed portions 211 and 221 of the first jig 210 and the second jig 220 may further include a plurality of protrusions 212 and 222 to improve the sealing efficiency of the first pouch sheet 120 and the second pouch sheet 130. Of course, the plurality of protrusions 212 and 222 may take any of a wide variety of shapes, including lines, crosses, geometric shapes, studs, grids and equivalents thereof, but not limited thereto.

As illustrated in FIGS. 3B and 3C, the plurality of protrusions 212 and 222 formed in the substantially planar, compressed portions 211 and 221 of the first jig 210 and the second jig 220 produce sealing marks 125 and 135, each having a predetermined pitch on the first sealed portion 140a having the width W1. The sealing marks 125 and 135 are generally formed in the insulation layer 120c and the insulation layer 130c of the multi-layered first and second pouch sheets 120 and 130, respectively. Here, the sealing marks 125 and 135 are formed as recesses engaged with the protrusions 212 and 222. That is to say, the plurality of protrusions 212 and 222 formed in the substantially planar, compressed portions 211 and 221 of the first jig 210 and the second jig 220 one transferred to the first sealed portion 140a in forms of recesses. As a consequence the sealing marks 125 and 135 assume the same configuration as the protrusions.

Meanwhile, in the first joining step (S20), a space S is formed between the first sealed portion 140a and the electrode assembly 110. The space S may serve as a passage through which electrolyte flows smoothly in the injecting of the electrolyte (S30). In addition, the electrolyte is contained in the space S for a predetermined time of period, thereby allowing the electrolyte to be rapidly impregnated into the electrode assembly 110. That is to say, the space S may function to improve the efficiency of impregnating the electrolyte into the electrode assembly 110.

In the first joining step (S20), determination of the exterior shape of the pouch type secondary battery is still uncompleted. In practice, it is in the second joining step (S50) subsequent to the first joining step (S20), specifically through a forming process using molds, that the exterior shape of the pouch type secondary battery is completely determined.

It will be appreciated that this process therefore results in an arrangement in which the pouch sheets closely conform to the shape of the electrode assembly because inner surfaces of the respective pouch sheets are in contact with an edge portion of the electrode assembly in a contact region that is adjacent the join between the pouch sheets. Although contact in these areas is particularly effective for meeting the objects of the invention, any contact between the pouch sheets and the electrode assembly as a consequence of the second joining step will tend to improve the conformity between the pouch sheets and the electrode assembly and hence provide a benefit.

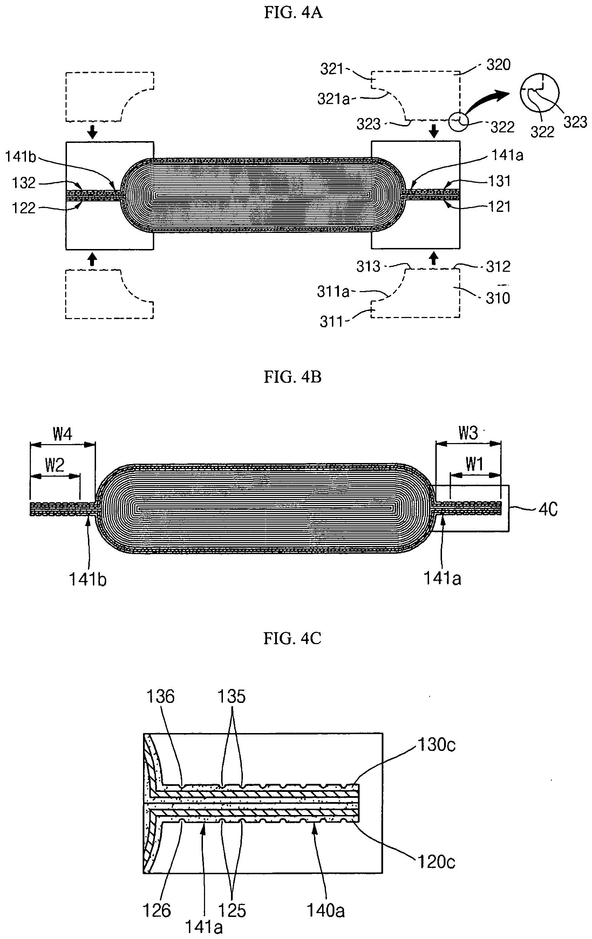

FIGS. 4A and 4B illustrate a second joining step in a fabrication method of a pouch type secondary battery according to an embodiment of the present invention, and FIG. 4C is a partially enlarged view of a rectangular portion indicated by '4C' of FIG. 4B.

As illustrated in FIG. 4A, in the second joining step (S50), a first mold jig 310 and a second mold jig 320 are used. That is to say, after the additional joining step (S40), some outer side portions of the first pouch sheet 120 and the second pouch sheet 130 are additionally sealed using the first mold jig 310 and the second mold jig 320 of the first pouch sheet 120 and the second pouch sheet 130. Further, the final exterior shape of the pouch type secondary battery is determined through the second joining step (S50). In addition, as the result of the second joining step (S50), the space S (see FIGS. 3A and 3B) provided between the electrode assembly 110 and the first sealed portion 140a (140b) is removed, thereby making the pouch type secondary battery more compact. That is to say, as illustrated in FIG. 4A, external surfaces of the electrode assembly 110 are completely covered by the first pouch sheet 120 and the second pouch sheet 130. In other words, curved portions of the wound electrode assembly 110 are completely covered by the first pouch sheet 120 and the second pouch sheet 130, thereby achieving hermetically sealing without a gap. Accordingly, curved portions are also formed in the first pouch sheet 120 and the second pouch sheet 130 to correspond to the curved portions of the wound electrode assembly 110.

Although FIG. 4A illustrates that the wound electrode assembly 110 having a cross section of a substantially elliptical shape, the invention can also be applied to a stack-type electrode assembly having a cross section of a substantially rectangular shape. That is to say, in case of using the stack-type electrode assembly having a cross section of a substantially rectangular shape, angled portions of the electrode assembly 110 can be completely covered by the first pouch sheet 120 and the second pouch sheet 130, thereby achieving hermetically sealing without a gap.

As described above, the portions subjected to the additionally sealing are defined as the additionally sealed portions 141a and 141b. The additionally sealed portion 141 a is formed at the first sides 121 and 131 of the first pouch sheet 120 and the second pouch sheet 130. In addition, the additionally sealed portion 141b is formed at the second sides 122 and 132 of the first pouch sheet 120 and the second pouch sheet 130. Here, the second joining step may make widths W3 and W4 of the portions sealed to the first sides 121 and 131 and the second sides 122 and 132 greater than the widths W1 and W2 of the portions sealed to the first sides 121 and 131 and the second sides 122 and 132 in the first joining step (S20). Here, the portions resulting from the second joining step, including the first sealed portions 140a, are formed over a larger area than an area of the first sealed portions 140a. For a better understanding of the present invention, however, portions obtained by subtracting the portion with the width W1 and W2 from the portion with the width W3 and by subtracting the portion with the width W2 from the portion with the width W4 are defined as the additionally sealed portions 141a and 141b, respectively.

Meanwhile, the first mold jig 310 and the second mold jig 320 include molded portions 311 and 321, and compressed portions 312 and 322, the molded portions 311 and 321 determining the exterior shapes of the first pouch sheet 120 and the second pouch sheet 130, and the compressed portions 312 and 322 being substantially planar and forming the additionally sealed portions 141a and 141b. The molded portions 311 and 321 include curves 311 a and 321a to form the exterior shape of the pouch type secondary battery, respectively. In other words, the curves 311a and 321a of the molded portions 311 and 321 compress the first pouch sheet 120 and the second pouch sheet 130, that is, inward portions of the additionally sealed portions 141a and 141b, thereby completing the exterior shape of the pouch type secondary battery. In addition, the substantially planar, compressed portions 312 and 322 include a plurality of protrusions 313 and 323, respectively, to improve the sealing efficiency of the first and second pouch sheets 120 and 130.

Accordingly, as illustrated in FIGS. 4B and 4C, sealing marks 126 and 136 each having a predetermined pitch are created on surfaces of the additionally sealed portions 141a and 141 b having the width W3 or W4. That is to say, the sealing marks 126 and 136 are also transferred to the additionally sealed portion 141a by the plurality of protrusions 313 and 323 formed in the compressed portions 312 and 322 of the first and second moldjigs 310 and 320.

Here, the second joining step creates a pitch difference between the sealing marks 125 and 135 formed in the first sealed portions 140a and between the sealing marks 126 and 136 formed in the additionally sealed portion 141a. That is to say, a pitch between the sealing marks 125 and 135 formed in the first sealed portions 140a is smaller than that between the sealing marks 126 and 136 formed in the additionally sealed portion 141a. Reversely, the pitch between the sealing marks 126 and 136 formed in the additionally sealed portion 141a is larger than that between the sealing marks 125 and 135 formed in the first sealed portions 140a. Further, the number of the sealing marks 125 and 135 formed in the first sealed portions 140a is greater than that of the sealing marks 126 and 136 formed in the additionally sealed portion 141 a. This is because sealing has been performed twice on the first sealed portion 140a and once on the additionally sealed portion 141a. Of course, the sealing marks 126 and 136 are closer to the electrode assembly comparing to the sealing marks 125 and 135. In addition, the plurality of the sealing marks may take any of a wide variety of shapes, including lines, crosses, geometric shapes, grooves, protrusions, studs, grids and equivalents thereof, but not limited thereto.

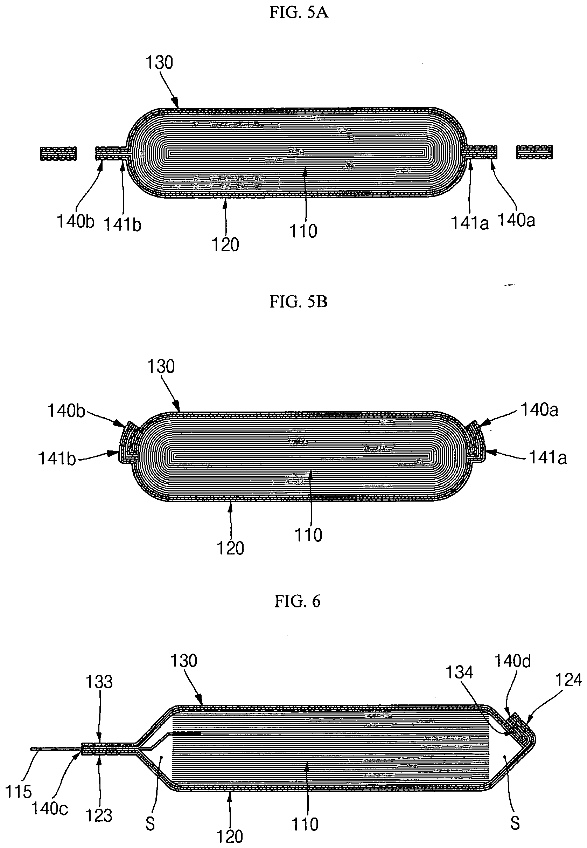

FIGS. 5A and 5B illustrate steps of cutting and folding in a fabrication method of a pouch type secondary battery according to an embodiment of the present invention.

As illustrated in FIG. 5A, in the cutting (S60), unnecessary side portions of the first pouch sheet 120 and the second pouch sheet 130 are cut for removal.

As illustrated in FIG. 5B, in the folding (S70), the side portions of the first pouch sheet 120 and the second pouch sheet 130 are folded to face the electrode assembly 110. That is to say, the first sealed portions 140a and 140b and the additionally sealed portions 141a and 141 b formed in the first pouch sheet 120 and the second pouch sheet 130 are folded approximately 90° either upward or downward. In some cases, the sealed portions in the left and the right sealed portions in the right may be folded in opposite directions. After the cutting (S60) and the folding (S70), the pouch type secondary battery can be miniaturized.

FIG. 6 is a cross-sectional view schematically illustrating a transversely cut section of a pouch type secondary battery according to an embodiment of the present invention.

As illustrated in FIG. 6, the second sealed portion 140d formed at the fourth side 124 of the first pouch sheet 120 and at the fourth side 134 of the second pouch sheet 130 may also be folded either upward or downward. Here, since the second joining step has not been performed on the second sealed portion 140d, a space S for accommodating electrolyte is provided between the electrode assembly 110 and the second sealed portion 140d.

Meanwhile, the fourth side 124 of the first pouch sheet 120 and the fourth side 134 of the second pouch sheet 130 may be folded in the same direction as the first sealed portions 140a and 140b and the additionally sealed portions 141 a and 141b, or in the opposite direction to the first sealed portions 140a and 140b and the additionally sealed portions 141 a and 141b, but the folding directions of the sealed portions are not limited to those illustrated. The folding directions of the sealed portions may vary in various manners according to the exterior shape of a sheath encasing the pouch type secondary battery according to the present invention.

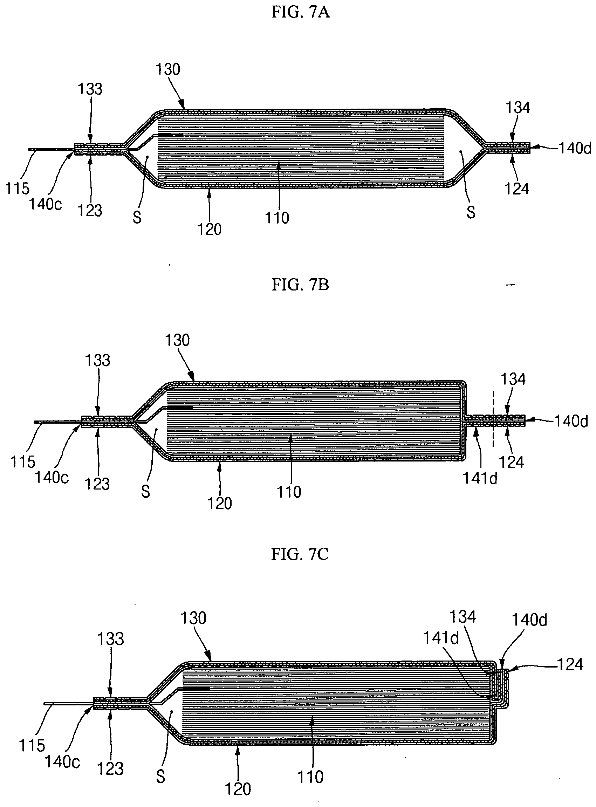

FIGS. 7A through 7C illustrate steps in a fabrication method of a pouch type secondary battery according to an embodiment of the present invention.

As illustrated in FIG. 7A, as the result of the additional joining step, the second sealed portion 140d is formed at the fourth sides 124 and 134 of the first and second pouch sheets 120 and 130. In addition, since the forming process using molds has not been performed at this stage, the space S still exists between the electrode assembly 110 and the second sealed portion 140d. The second sealed portion 140d may include a plurality of sealing marks formed using protrusions formed in jigs, which has already been described above.

As illustrated in FIG. 7B, as the result of the second joining step, the additionally sealed portion 141d is formed at the fourth sides 124 and 134 of the first and second pouch sheets 120 and 130. The additionally sealing removes the space S provided between the electrode assembly 110 and the second sealed portion 140d. That is to say, the first and second pouch sheets 120 and 130 are hermetically sealed to one side edge portion of the electrode assembly 110 without a gap.

In addition, as described above, the additionally sealed portion 141d may include a plurality of sealing marks formed by the protrusions formed in the mold jigs. Of course, sealing marks may be additionally formed at the second sealed portion 140d as well. Eventually, the second sealed portion 140d may include a relatively large number of sealing marks. In addition, after performing the additionally sealing, unnecessary portions of the sealed portions may be cut for removal.

As illustrated in FIG. 7C, the second sealed portion 140d and the additionally sealed portion 141d may be folded either upward or downward. Likewise, the second sealed portion 140d and the additionally sealed portion 141d may be folded in the same direction as the first sealed portions 140a and 140b and the additionally sealed portions 141a and 141 b, or in the opposite direction to the first sealed portions 140a and140b and the additionally sealed portions 141a and 141b, but the folding directions of the sealed portions are not limited to those illustrated.

As described above, although specific embodiments have been disclosed herein, they are to be interpreted in a descriptive sense only and not for purpose of limitation. Accordingly, it will be understood by those of ordinary skill in the art that various changes in form and details may be made without departing from the scope of the present invention as set forth in the following claims.

## Claims

1. A fabrication process for a secondary battery, wherein the process comprises:
locating an electrode assembly between a first pouch sheet and a second pouch sheet; **characterised by**
performing a first joining step, in which respective portions of the first pouch sheet and the second pouch sheet are joined together, so as to form a seal that at least partially surrounds the electrode assembly;
subsequently supplying the electrode assembly with an electrolyte; and
subsequently performing a second joining step, in which further respective portions of the first pouch sheet and the second pouch sheet are joined together in a region situated between the seal and the electrode assembly;
wherein an opening is left between respective portions of the first pouch sheet and the second pouch sheet during the first joining step and the electrolyte is supplied to the electrode assembly via the said opening.

2. A process according to Claim 1, wherein the electrode assembly comprises an electrode tab and the opening is left on a side of the electrode assembly that is substantially opposite to a side from where the electrode tab extends.

3. A process according to Claim 1 or 2, comprising performing an additional joining step in which the opening is sealed after the electrolyte is supplied to the electrode assembly.

4. A process according to any preceding claim, wherein the said respective portions of the first pouch sheet and the second pouch sheet that are joined together in the said first joining step are at least partially located in one or more edge regions of the first pouch sheet and the second pouch sheet.

5. A process according to any preceding claim, further comprising folding at least a part of the said respective portions of the first pouch sheet and the second pouch sheet that have been joined during the said first joining step and arranging the folded part to lie alongside another part of either the first pouch sheet or the second pouch sheet.

6. A process according to any preceding claim, wherein the first joining step comprises pressing together and thermally fusing the said respective portions of the first pouch sheet and second pouch sheet.

7. A process according to Claim 6, wherein the said first joining step is executed using opposed first jigs that each have a plurality of protrusions that form corresponding first indentations on respective surfaces of the first pouch sheet and second pouch sheet.

8. A process according to any preceding claim, wherein the second joining step substantially eliminates a void.

9. A process according to any preceding claim, wherein the second joining step is executed using opposed second jigs that each have a compression surface substantially conforming to an outer surface profile of the electrode assembly.

10. A process according to Claim 9, wherein the second jigs each have a plurality of protrusions that form corresponding second indentations on respective surfaces of the first pouch sheet and second pouch sheet.

## Patentansprüche

1. Herstellungsverfahren für eine Sekundärbatterie, wobei das Verfahren umfasst:
Positionieren einer Elektrodenanordnung zwischen einer ersten Beutelfolie und einer zweiten Beutelfolie; **gekennzeichnet durch**
Ausführen eines ersten Schritts des Verbindens, in welchem entsprechende Abschnitte der ersten Beutelfolie und der zweiten Beutelfolie miteinander verbunden werden, um eine Dichtung zu bilden, welche die Elektrodenanordnung zumindest teilweise umschließt;
anschließendes Zuführen eines Elektrolyten zu der Elektrodenanordnung; und
anschließendes Ausführen eines zweiten Schritts des Verbindens, in welchem weitere entsprechende Abschnitte der ersten Beutelfolie und der zweiten Beutelfolie in einem Bereich miteinander verbunden werden, welcher zwischen der Dichtung und der Elektrodenanordnung angeordnet ist;
wobei eine Öffnung zwischen entsprechenden Abschnitten der ersten Beutelfolie und der zweiten Beutelfolie während des ersten Schritts des Verbindens freigelassen ist und der Elektrolyt über die Öffnung zu der Elektrodenanordnung zugeführt wird.

2. Verfahren nach Anspruch 1, wobei die Elektrodenanordnung eine Elektrodenzunge umfasst und die Öffnung auf einer Seite der Elektrodenanordnung freigelassen ist, welche im Wesentlichen einer Seite gegenübersteht, in welcher die Elektrodenzunge sich erstreckt.

3. Verfahren nach Anspruch 1 oder 2, umfassend das Ausführen eines zusätzlichen Schritts des Verbindens, in welchem die Öffnung versiegelt wird, nachdem der Elektrolyt zu der Elektrodenanordnung zugeführt worden ist.

4. Verfahren nach einem der vorhergehenden Ansprüche, wobei die entsprechenden Abschnitte der ersten Beutelfolie und der zweiten Beutelfolie, welche im ersten Schritt des Verbindens miteinander verbunden worden sind, zumindest teilweise in einem oder mehreren Randbereichen der ersten Beutelfolie und der zweiten Beutelfolie angeordnet sind.

5. Verfahren nach einem der vorhergehenden Ansprüche, ferner umfassend das Falten zumindest eines Teils der entsprechenden Abschnitte der ersten Beutelfolie und der zweiten Beutelfolie, welche im ersten Schritt des Verbindens miteinander verbunden worden sind, und das Anordnen des gefalteten Teils so, dass er entlang eines anderen Teils der ersten Beutelfolie oder der zweiten Beutelfolie zu liegen kommt.

6. Verfahren nach einem der vorhergehenden Ansprüche, wobei der erste Schritt des Verbindens das Zusammendrücken und das thermische Schmelzen der entsprechenden Abschnitte der ersten Beutelfolie und der zweiten Beutelfolie umfasst.

7. Verfahren nach Anspruch 6, wobei der erste Schritt des Verbindens unter Verwendung von entgegengesetzten ersten Spannvorrichtungen ausgeführt wird, welche jeweils eine Mehrzahl von Vorsprüngen aufweisen, welche entsprechende erste Einkerbungen auf entsprechenden Oberflächen der ersten Beutelfolie und der zweiten Beutelfolie bilden.

8. Verfahren nach einem der vorhergehenden Ansprüche, wobei der zweite Schritt des Verbindens einen Hohlraum im Wesentlichen eliminiert.

9. Verfahren nach einem der vorhergehenden Ansprüche, wobei der zweite Schritt des Verbindens unter Verwendung von entgegengesetzten zweiten Spannvorrichtungen ausgeführt wird, welche jeweils eine Pressfläche aufweisen, welche sich im Wesentlichen an ein Außenflächenprofil der Elektrodenanordnung anpasst.

10. Verfahren nach Anspruch 9, wobei die zweiten Spannvorrichtungen jeweils eine Mehrzahl von Vorsprüngen aufweisen, welche entsprechende zweite Einkerbungen auf entsprechenden Oberflächen der ersten Beutelfolie und der zweiten Beutelfolie bilden.

## Revendications

1. Procédé de fabrication pour une batterie secondaire, dans lequel le procédé comprend :
le positionnement d'un assemblage d'électrodes entre une première feuille de poche et une seconde feuille de poche ; **caractérisé par** :
la réalisation d'une première étape de jonction au niveau de laquelle des sections respectives de la première feuille de poche et de la seconde feuille de poche sont jointes ensemble, de manière à former un scellement qui entoure au moins partiellement l'assemblage d'électrodes ;
l'alimentation ensuite d'un électrolyte sur l'assemblage d'électrodes ; et
la réalisation ensuite d'une seconde étape de jonction au niveau de laquelle d'autres sections respectives de la première feuille de poche et de la seconde feuille de poche sont jointes ensemble au niveau d'une région qui est située entre le scellement et l'assemblage d'électrodes ;
dans lequel une ouverture est laissée entre des sections respectives de la première feuille de poche et de la seconde feuille de poche pendant la première étape de jonction et l'électrolyte est alimenté sur l'assemblage d'électrodes via ladite ouverture.

2. Procédé selon la revendication 1, dans lequel l'assemblage d'électrodes comprend une languette d'électrode et l'ouverture est laissée sur un côté de l'assemblage d'électrodes qui est sensiblement opposé à un côté depuis lequel la languette d'électrode s'étend.

3. Procédé selon la revendication 1 ou 2, comprenant la réalisation d'une étape de jonction additionnelle au niveau de laquelle l'ouverture est scellée après que l'électrolyte est alimenté sur l'assemblage d'électrodes.

4. Procédé selon l'une quelconque des revendications précédentes, dans lequel lesdites sections respectives de la première feuille de poche et de la seconde feuille de poche qui sont jointes ensemble au niveau de ladite première étape de jonction sont au moins partiellement positionnées au niveau d'une ou de plusieurs région(s) de bord de la première feuille de poche et de la seconde feuille de poche.

5. Procédé selon l'une quelconque des revendications précédentes, comprenant en outre le pliage d'au moins une partie desdites sections respectives de la première feuille de poche et de la seconde feuille de poche qui ont été jointes pendant ladite première étape de jonction et l'agencement de la partie pliée de sorte qu'elle s'étende le long d'une autre partie de soit la première feuille de poche, soit la seconde feuille de poche.

6. Procédé selon l'une quelconque des revendications précédentes, dans lequel la première étape de jonction comprend la pression ensemble et la thermo-fusion desdites sections respectives de la première feuille de poche et de la seconde feuille de poche.

7. Procédé selon la revendication 6, dans lequel ladite première étape de jonction est exécutée en utilisant des premiers gabarits opposés qui comportent chacun une pluralité de protubérances qui forment des premières indentations correspondantes sur des surfaces respectives de la première feuille de poche et de la seconde feuille de poche.

8. Procédé selon l'une quelconque des revendications précédentes, dans lequel la seconde étape de jonction élimine sensiblement un vide.

9. Procédé selon l'une quelconque des revendications précédentes, dans lequel la seconde étape de jonction est exécutée en utilisant des seconds gabarits opposés qui comportent chacun une surface de compression qui se conforme sensiblement à un profil de surface externe de l'assemblage d'électrodes.

10. Procédé selon la revendication 9, dans lequel les seconds gabarits comportent chacun une pluralité de protubérances qui forment des secondes indentations correspondantes sur des surfaces respectives de la première feuille de poche et de la seconde feuille de poche.
